# EUROPEAN PATENT APPLICATION

(11) **EP 4 806 551 A1**
(43) Date of publication of application: **16.09.2026**
(21) Application number: 23958169.7
(22) Date of filing: 25.12.2023
(51) Int. Cl.: B01J 23/755, B01J 25/02, B01J 31/34, C01G 39/00, C10G 45/00

(54) **HYDROGENATION CATALYST, PREPARATION METHOD AND USE THEREFOR, AND OIL PRODUCT HYDROTREATING METHOD**

(30) Priority: 10.11.2023 CN 202311494116
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: JIANG, Shujiao, Dalian, Liaoning 116045 (CN); DING, Sijia, Dalian, Liaoning 116045 (CN); YANG, Gang, Dalian, Liaoning 116045 (CN); YUAN, Shenghua, Dalian, Liaoning 116045 (CN); GENG, Xinguo, Dalian, Liaoning 116045 (CN)
(74) Representative: karo IP
(86) International application number: PCT/CN2023/141515
(87) International publication number: WO 2025/097571

(57) **Abstract**

A hydrogenation catalyst, a preparation method and use therefor, and an oil product hydrotreating method. The hydrogenation catalyst comprises a support and an active component. The support comprises a nickel-aluminum alloy. The active component comprises a sulfur-containing organic molybdenum compound. The hydrogenation catalyst has high hydrotreating capacity for inferior raw oil products.

## Description

### CROSS-REFERENCE TO RELATED APPLICATIONS

The application claims the benefit of the China patent application No. "202311494116.0", filed on November 10, 2023, the content of which is specifically and entirely incorporated herein by reference.

### TECHNICAL FIELD

The invention belongs to the technical field of hydrogenation catalysts, and relates to a hydrogenation catalyst, a preparation method therefor and a use thereof.

### BACKGROUND ART

The conventional alumina-nickel-molybdenum hydrogenation catalyst has a limited content of hydrogenation metal nickel, which limits hydrogenation activity of the catalyst. For processing a feedstock having a high content of aromatic hydrocarbons, the conventional hydrogenation catalyst not only needs high temperature and pressure, but also is prone to coking, carbon deposition and other problem.

CN103861596A discloses a preparation method of nickel-based hydrogenation catalyst. The method comprises the following steps: dissolving a soluble salt of an active component nickel and a soluble salt of an adjuvant in water, and preparing a mixed aqueous solution of nickel and the adjuvant; and then adding the mixed aqueous solution and a soluble salt of a precipitation agent into a reaction kettle in a parallel flow mode, until the reaction kettle temperature reaches a certain temperature, adding a support, keeping reaction for a period of time, thus obtaining a catalyst precursor, carrying out washing, drying and reduction of the precursor to obtain the nickel-based catalyst. The catalyst has advantages of mild reaction conditions, high activity of the catalyst, high target product selectivity and the like, and has wide applicability in actual industrial production. However, the hydrogenation catalyst is not suitable for treating heavy and inferior oil products.

CN113019371A discloses a skeletal nickel catalyst precursor, a skeletal nickel catalyst and a preparation method thereof. A dispersing agent and water are added into three kinds of alloy particles with different particle sizes and compositions for compounding to obtain uniform slurry, then the uniform slurry is activated and post-treated to prepare the catalyst, the particle size distribution of the catalyst is wide, and the particles with different particle sizes have a magnetic synergistic effect. The catalyst also has difficulty in effectively removing heteroatoms in an oil product, limiting the use of said catalyst.

### SUMMARY OF THE INVENTION

In order to overcome the defect in the prior art that the hydrotreating capacity of the hydrogen catalyst needs to be further enhanced, the present invention provides a hydrogen catalyst and a preparation method therefor and use thereof and an oil product hydrotreating method, the hydrogen catalyst provided by the invention has a high hydrotreating capacity for inferior raw oil products.

The first aspect of the present invention provides a hydrogenation catalyst comprising a support and an active component, wherein the support comprises a nickel-aluminum alloy, and the active component comprises a sulfur-containing organic molybdenum compound.

The combination of a sulfur-containing organic molybdenum compound with a nickel-aluminum alloy and binding a sulfur-containing molybdenum species with nickel can form the Ni-Mo-S active sites, provide hydrogenation centers, and enhance utilization rate of molybdenum and hydrogenation activity of the catalyst, thereby further contributing to the improvement of the hydrotreating capacity of said catalyst.

Preferably, the sulfur-containing organic molybdenum compound is molybdenum dialkyl dithiophosphate and/or molybdenum dialkyl dithiocarbamate; more preferably, the molybdenum dialkyl dithiophosphate is at least one selected from the group consisting of molybdenum diisopropyl dithiophosphate, molybdenum dibutyl dithiophosphate, molybdenum diisooctyl dithiophosphate, molybdenum diisobutyl dithiophosphate, molybdenum dipropyl dithiophosphate, molybdenum dipentyl dithiophosphate, molybdenum dihexyl dithiophosphate and molybdenum diheptyl dithiophosphate; more preferably, the molybdenum dialkyl dithiocarbamate is at least one selected from the group consisting of molybdenum diisopropyl dithiocarbamate, molybdenum dibutyl dithiocarbamate, molybdenum dipentyl dithiocarbamate, molybdenum dihexyl dithiocarbamate, molybdenum diheptyl dithiocarbamate and molybdenum dioctyl dithiocarbamate.

Preferably, the support comprises a silicon-modified nickel-aluminum alloy, further preferably comprises an organosilicon-modified nickel-aluminum alloy.

Preferably, based on the total dry basis weight of the hydrogenation catalyst, the content of Al calculated in terms of alumina is within the range of 62%-85%, more preferably within the range of 68%-80%; the content of Ni calculated in terms of nickel oxide is within the range of 8%-18%, more preferably within the range of 9%-15%; the content of Mo calculated in terms of molybdenum trioxide is within the range of 6%-18%, more preferably within the range of 8%-17%; the content of Si calculated in terms of silicon dioxide is within the range of 0.2%-3%, more preferably within the range of 0.5%-2%.

Preferably, the hydrogenation catalyst further comprises a metal promoter, the metal is at least one selected from the group consisting of group IA, IIA, IIIA, IB and IIB metals.

The second aspect of the present invention provides a preparation method for a hydrogenation catalyst, the method comprises the following steps:

Loading a sulfur-containing organic molybdenum compound on a nickel-aluminum alloy by an impregnation method, and then subjecting to drying.

The third aspect of the present invention provides a hydrogenation catalyst prepared with the method according to the second aspect.

The fourth aspect of the present invention provides a use of the hydrogenation catalyst according to the first aspect or the third aspect in oil product hydroprocessing.

The fifth aspect of the present invention provides an oil product hydrotreating method, the method comprises: contacting and reacting the oil product with the hydrogenation catalyst according to the first aspect or the third aspect under the hydrotreating conditions.

The catalyst of the present invention has the following advantages over the prior art:
(1) The hydrogenation catalyst of the present invention uses a nickel-aluminum alloy as the support material for the catalytic substrate, in combination with a sulfur-containing organic molybdenum compound as an active component, and a sulfur-containing molybdenum species is coupled with nickel to form the Ni-Mo-S active sites for providing hydrogenation centers, thereby improving the utilization rate of molybdenum and the hydrogenation activity of said catalyst.
(2) The hydrogenation catalyst of the present invention has a higher hydrogenation activity than the molybdenum species obtained after vulcanization from an oxidation state, and the MoS₂ particles which are not loaded.
(3) The hydrogenation catalyst of the present invention has a simple preparation process. It can be used directly by introducing an active component and an activation process.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

Unless otherwise specified in the invention, all percentages and percentage contents are calculated in terms of mass.

The first aspect of the present invention provides a hydrogenation catalyst comprising a support and an active component, wherein the support comprises a nickel-aluminum alloy, and the active component comprises a sulfur-containing organic molybdenum compound.

In the invention, the nickel-aluminum alloy and the sulfur-containing organic molybdenum compound can be selected from wide ranges. Both the nickel-aluminum alloy and the sulfur-containing organic molybdenum compound have the conventional meaning in the field, the sources of two compounds are not specifically limited, the two compounds are either commercially available, or homemade with any feasible method.

The sulfur-containing organic molybdenum compound of the present invention may be various oil soluble sulfur-containing organic molybdenum compounds conventionally used in the field. Preferably, the sulfur-containing organic molybdenum compound is molybdenum dialkyl dithiophosphate and/or molybdenum dialkyl dithiocarbamate (MoDTC). The invention has a wide selection range for the alkyl group in said sulfur-containing organic molybdenum compound, the alkyl may be C1-C13 alkyl (straight chain or branched chain), including, but not limited to, methyl, ethyl, propyl, isopropyl, n-butyl, isobutyl, pentyl, hexyl, heptyl, n-octyl, iso-octyl.

Preferably, the molybdenum dialkyl dithiophosphate is at least one selected from the group consisting of molybdenum diisopropyl dithiophosphate, molybdenum dibutyl dithiophosphate, molybdenum diisooctyl dithiophosphate, molybdenum diisobutyl dithiophosphate, molybdenum dipropyl dithiophosphate, molybdenum dipentyl dithiophosphate, molybdenum dihexyl dithiophosphate and molybdenum diheptyl dithiophosphate; more preferably, at least one selected from the group consisting of molybdenum diisopropyl dithiophosphate, molybdenum dibutyl dithiophosphate, and molybdenum diisooctyl dithiophosphate.

Preferably, the molybdenum dialkyl dithiocarbamate is at least one selected from the group consisting of molybdenum diisopropyl dithiocarbamate, molybdenum dibutyl dithiocarbamate, molybdenum dipentyl dithiocarbamate, molybdenum dihexyl dithiocarbamate, molybdenum diheptyl dithiocarbamate and molybdenum dioctyl dithiocarbamate; more preferably molybdenum dibutyl dithiocarbamate and/or molybdenum diisopropyl dithiocarbamate.

In the invention, the contents of nickel and aluminum in the nickel-aluminum alloy are selected from wide ranges; preferably, the content of aluminum calculated in terms of aluminum element is 50wt%-95wt%, and the content of nickel calculated in terms of nickel element is 5wt%-50wt%, based on the total weight of the nickel-aluminum alloy. More preferably, the content of aluminum calculated in terms of aluminum element is 70wt%-90wt%, and the content of nickel calculated in terms of nickel element is 10wt%-30wt%, based on the total weight of the nickel-aluminum alloy. An use of such a preferred embodiment, the nickel can be efficiently cooperated with the sulfur-containing organic molybdenum compound to improve the hydrogenation performance of the catalyst, and the content of nickel in the nickel-aluminum alloy is not too high.

According to a preferred embodiment of the invention, the content of Al calculated in terms of alumina is within the range of 63%-86%, more preferably within the range of 69%-81%; the content of Ni calculated in terms of nickel oxide is within the range of 8%-20%, more preferably within the range of 9%-16%; the content of Mo calculated in terms of molybdenum trioxide is within the range of 6%-20%, more preferably within the range of 8%-18%, based on the total dry basis weight of the hydrogenation catalyst.

In the present invention, the dry basis measurement method of the hydrogenation catalyst is as follows: in an air atmosphere, heating the catalyst from 120°C to 420°C at a temperature-rise rate of 3.0°C/min, and performing calcination at 420°C for 4.0 hours, further heating the catalyst to 550°C at a temperature-rise rate of 3.0°C/min, and carrying out calcination at 550°C for 2.0 hours, implementing analysis on the obtained product in an environment that is kept dry.

The dry basis content of components can be measured by using an Inductively Coupled Plasma- Atomic Emission Spectroscopy (ICP-AES) method, in particular, the device is the OPTIMA 7000 DV type atomic emission spectrometer manufactured by the PE Incorporation. In a typical solution formulation process, 0.1g of a sample is dissolved in a mixed solution consisting of HCl, HNO₃ and HF in a volume ratio of 3:1:0.5, the mixed solution is then diluted with deionized water to a volume such that a content of the element to be measured in the solution is within the range of 1-10 ppm, in order to increase accuracy of the measured data.

An analytical method for the metallo-organic compounds in the catalyst may be performed by analyzing the product with the X-ray Photoelectron Spectroscopy (XPS), the test conditions of the XPS include: light source: Mg Kα, energy step length: 0.05 eV, scan range: 200-250 eV (molybdenum), 280-300 eV (carbon). When analyzing the valence state of molybdenum, it is believed that the molybdenum with a binding energy of 227-228eV on the 3d5/2 track is the 0 valent Mo species, the molybdenum with a binding energy of 228-229 eV on the 3d5/2 track is the +2 valent Mo species, the molybdenum with a binding energy of 229-231 eV on the 3d5/2 track is the +4 valent Mo species, the molybdenum with a binding energy larger than 231 eV on the 3d5/2 track is +5 valent Mo or +6 valent Mo.

Wherein the binding energy of an organometallic molybdenum on the 3d5/2 track is within the range of 227-229 eV, the organometallic molybdenum belongs to the molybdenum species between the 0 valent Mo and the +2 valent Mo. The test method of other metal organic compounds (e.g., Ga, Zn, Mg and Cu) is similar to that of the molybdenum element, the valent state of said metal promoter is analyzed and measured belong to organic species with valences ranging from 0 to +1, demonstrating the presence of sulfur-containing organic molybdenum compounds.

According to the present invention, the support preferably comprises a silicon-modified nickel-aluminum alloy, more preferably comprises an organosilicon-modified nickel-aluminum alloy. By using such a preferred embodiment, the modified nickel-aluminum alloy contained in the catalyst provides the catalytic substrates with a large amount of activated hydrogen, which can provide conditions for hydrogen transfer, and combining with an active component which is a sulfur-containing organic molybdenum compound, particularly molybdenum dialkyl dithiophosphates and/or molybdenum alkyl dithiocarbamates, the sulfur-containing molybdenum species combine with nickel to form more Ni-Mo-S active sites that provide hydrogenation centers, thereby further improving utilization rate of molybdenum and hydrogenation activity of the catalyst.

According to the invention, the organosilicon is preferably selected from the alkoxy silane. In the alkoxy silane of the present invention, the number of alkoxy groups may be 1-4 as long as the alkoxy group is contained in the alkoxy silane. The organosilicon can be at least one selected from the group consisting of trialkoxy silane, alkyl trialkoxy silane, dialkyl dialkoxy silane, trialkyl alkoxy silane, and tetra-alkoxy silane.

The alkyl refers to a straight chain or branched chain alkyl group, and the number of carbon atoms in the alkyl group is preferably from 1 to 8. The C1-C8 alkyl includes but not limited to, methyl, ethyl, n-propyl, isopropyl, n-butyl, isobutyl, sec-butyl, tert-butyl, n-pentyl, isopentyl, n-hexyl, n-octyl, iso-octyl and the like.

The alkoxy refers to a straight chain or branched chain alkyl group with an end connected with an oxygen atom, and the number of carbon atoms in the alkoxy is preferably from 1 to 8. The C1-C8 alkoxy includes but not limited to, methoxy, ethoxy, n-propoxy, iso-propoxy, n-butoxy, and the like.

Further preferably, the alkoxy silane is at least one selected from the group consisting of methyl trimethoxysilane, triethoxysilane, methyl triethoxysilane, propyl trimethoxysilane, butyl triethoxysilane and octyl triethoxysilane.

According to the invention, the content of the organosilicon compound calculated in terms of SiO₂ in the hydrogenation catalyst is preferably within the range of 0.2%-3%, more preferably within the range of 0.5%-2%, based on the total dry basis weight of the hydrogenation catalyst.

Under the preferred embodiment, in the hydrogenation catalyst, the content of Al calculated in terms of alumina is within the range of 62%-85%, more preferably within the range of 68%-80%; the content of Ni calculated in terms of nickel oxide is within the range of 8%-18%, more preferably within the range of 9%-15%; the content of Mo calculated in terms of molybdenum trioxide is within the range of 6%-18%, more preferably within the range of 8%-17%; the content of Si calculated in terms of silicon dioxide is within the range of 0.2%-3%, more preferably within the range of 0.5%-2%, based on the total dry basis weight of the hydrogenation catalyst.

According to the present invention, preferably, the hydrogenation catalyst may further comprise various metal and/or nonmetal promoters which are conducive for enhancing hydrogenation performance of the catalyst.

Preferably, the hydrogenation catalyst further comprises a metal promoter, the metal is at least one selected from the group consisting of group IA, IIA, IIIA, IB and IIB metals.

The group IA metal includes, but is not limited to, Na, K, Rb.

The group IIA metal includes, but is not limited to, Mg, Ca, Sr.

The group IIIA metal includes, but is not limited to, Al, Ga, In.

The group IB metal includes, but is not limited to, Cu, Ag.

The group IIB metal includes, but is not limited to, Zn, Cd.

According to the present invention, the metal is preferably at least one selected from the group consisting of Zn, Ga, Mg and Cu, more preferably Zn and/or Ga. With the embodiment, it is more advantageous to perform a synergy of the metal promoter and the sulfur-containing organic molybdenum compound.

Preferably, the metal promoter is a metallo-organic compound, for example an oil-soluble metallo-organic compound.

In accordance with the present invention, the metal promoter is preferably a metallo-zinc-organic compound and/or a metallo-gallium-organic compound. Further preferably, the metallo-zinc-organic compound is zinc dialkyl dithiophosphate and/or zinc dialkyl dithiocarbamate; and the metallo-gallium-organic compound is at least one selected from the group consisting of triethyl gallium, tri-isopropyl gallium, tri-tert-butyl gallium, gallium acetylacetonate, gallium ethoxide, isopropyl gallium.

The selection ranges of organic ligands coordinated to the zinc in the zinc dialkyl dithiophosphate and/or zinc dialkyl dithiocarbamate may be identical with those of the molybdenum dialkyl dithiophosphate and/or molybdenum dialkyl dithiocarbamate mentioned above; the content is not repeatedly described herein. Preferably, the metallo-zinc-organic compound is at least one selected from the group consisting of zinc dibutyl dithiophosphate, zinc diisooctyl dithiophosphate, and zinc diethyl dithiocarbamate.

When a metallo-gallium-organic compound is used in the catalyst provided by the present invention, it is advantageous for enhancing the hydrogenation activity, because the elements gallium and aluminum belong to the same group, and can also be combined with nickel and interact with the supported organomolybdenum species. In addition, the metallo-gallium-organic compound can form strong Ga-N triple bonds with nitrogen and has very strong interactions with nitrides in an oil product, thus the metallo-gallium-organic compound is very conducive for improving the hydrogenation and denitrogenation activity.

When a metallo-zinc-organic compound is used in the catalyst provided by the invention, since the metallo-zinc-organic compound has similar physicochemical properties with the sulfur-containing organic molybdenum compound, their distribution patterns on a nickel-aluminum alloy support surface are similar, and their distribution sites are close, the phase separation of zinc and molybdenum is avoided, so that the hydrogenation effect, particularly hydrodesulfurization effect, is more conspicuous.

Preferably, the content of said metal promoter calculated in terms of metal oxide is within the range of 1.5%-7%, more preferably within the range of 2%-5.5%, based on the total dry basis weight of the hydrogenation catalyst.

The invention has a wide selection range for pore volume of the hydrogenation catalyst, the hydrogenation catalyst preferably has a pore volume within the range of 0.1-1 cm³/g, more preferably 0.15-0.6 cm³/g.

According to a preferred embodiment of the invention, the hydrogenation catalyst has an average pore diameter within the range of 4-15 nm, more preferably within the range of 6-12 nm.

According to a preferred embodiment of the invention, a pore volume of pores having a pore diameter of 0-3nm constitutes 1%-10%, more preferably 2%-5% of the total pore volume of the hydrogenation catalyst. The use of a catalyst according to the preferred embodiment is more conducive for the mass transfer and diffusion of the reactant molecules.

According to some embodiments of the invention, the pore volume of pores having a pore diameter of 0-3nm and the total pore volume of the catalyst are measured by using the nitrogen gas isothermal adsorption-desorption method.

The second aspect of the invention provides a preparation method for a hydrogenation catalyst, the method comprises the following steps:

Loading a sulfur-containing organic molybdenum compound on a nickel-aluminum alloy by an impregnation method, and then subjecting to drying.

The selection ranges of various kinds of sulfur-containing organic molybdenum compound and nickel-aluminum alloy in the method provided by the invention may be identical with the selection ranges according to the first aspect, the relevant contents will not be repeatedly described herein.

Preferably, the nickel-aluminum alloy has a pore volume within the range of 0.4-1.0 cm³/g, more preferably within the range of 0.5-0.9 cm³/g, and an average pore diameter within the range of 4-12 nm, more preferably within the range of 6-10 nm, wherein the volume fraction of small pores having a pore diameter smaller than 3.0 nm is not more than 20%, preferably within the range of 5-10%.

The present invention has a wide selection range of particle sizes for the nickel-aluminum alloy, the particle size can be selected adaptively based on actual use environment. Preferably, the nickel-aluminum alloy has an average particle size of 1-8 mm, preferably 2-5 mm.

According to the method provided by the invention, preferably, the method further comprises: silicon-modifying the nickel-aluminum alloy with a silicon-containing compound, more preferably silicon-modifying the nickel-aluminum alloy with an organic silicon-containing compound.

Preferably, the silicon-containing compound is selected from alkyl silane and/or alkoxy silane, more preferably alkoxy silane. The selection ranges of various alkoxy silanes may be same as the selection ranges according to the first aspect mentioned above, the content will not be repeatedly described herein.

Preferably, the organosilicon modification causes that the content of organosilicon compounds calculated in terms of silicon dioxide in the prepared hydrogenation catalyst is within the range of 0.2-3%, preferably within the range of 0.5-2%, based on the total dry basis weight of the hydrogenation catalyst.

The invention has a wide selection range for the specific operation of silicon modification, in particular, silicon-modifying the nickel-aluminum alloy may comprise: contacting the nickel-aluminum alloy with a silicon-containing compound to carry out the silicon modification. The silicon modification may be performed by mixing a silicon-containing compound with a solvent and then contacting with a nickel-aluminum alloy, subsequently drying to remove the solvent. Alternatively, the silicon modification may be performed by dry mixing the nickel-aluminum alloy with a solid phase silicon-containing compound, or be performed by means of vapor deposition.

According to a preferred embodiment of the invention, silicon-modifying the nickel-aluminum alloy comprises: contacting the nickel-aluminum alloy with a gas-phase silicon-containing compound to carry out the silicon modification. An use of the preferred embodiment can desirably ensure the preferential plugging of the silicon-containing compound at the pores of the catalyst, thereby optimizing the pore structure of the nickel-aluminum alloy catalyst and preventing subsequent deposition of molybdenum metal at the small pores. Moreover, the silicon, particularly the organosilicon, on the surface of the nickel-aluminum alloy can effectively partition the nickel surface and prevent molybdenum species from aggregation on the nickel surface.

According to the present invention, it is preferable that a support gas can also be introduced simultaneously while contacting the nickel-aluminum alloy with the gas-phase silicon-containing compound; the present invention does not impose particular limitations on the selection ranges of said support gas, as long as the support gas does not participate in the reaction. The support gas is preferably at least one selected from the group consisting of nitrogen gas, helium gas, argon gas and neon gas.

Preferably, the silicon modification conditions comprise: a temperature within the range of 160-400°C, more preferably within the range of 180-350°C, a time of 1-10 hours, more preferably 2-8 hours; the flow rate of the gas-phase silicon-containing compound is within the range of 1-20 mL/min·g⁻¹ nickel-aluminum alloy, more preferably within the range of 3-15 mL/min·g⁻¹ nickel-aluminum alloy; the partial pressure of the gas-phase silicon-containing compound is within the range of 0.02-1 MPa, more preferably within the range of 0.05-0.5 MPa.

According to a specific embodiment of the invention, prior to introducing the gas-phase silicon-containing compound, a heating operation is performed according to the boiling point of the silicon-containing compound in use, and the specific temperature can be adjusted based on the boiling point of the corresponding silicon-containing compound.

According to the invention, it is preferred that the method further comprises: subjecting the nickel-aluminum alloy to a vacuumization treatment prior to the silicon modification and subjecting the nickel-aluminum alloy to a displacement treatment after the silicon modification. In this way, it is more conducive to the deposition of the alkoxy silane on small pores of the nickel-aluminum alloy support.

Preferably, the vacuumization treatment conditions comprise: a temperature within the range of 50-200°C, more preferably within the range of 80-150°C; a vacuum degree within the range of 0.05-1 torr, more preferably within the range of 0.1-0.5 torr; and a treatment time of 2-10 hours, more preferably 4-8 hours.

Preferably, the displacement treatment is performed by using an inert gas, and the displacement treatment conditions comprise: a flow rate of the inert gas is within the range of 0.5-5 mL/min·g⁻¹ nickel-aluminum alloy, more preferably within the range of 1-4 mL/min·g⁻¹ nickel-aluminum alloy; the replacement time is 0.5-8 hours, more preferably 1-4 hours; the temperature is within the range of 100-400°C, more preferably within the range of 150-350°C. The inert gas is preferably at least one selected from the group consisting of nitrogen gas, helium gas, argon gas and neon gas.

According to the method provided by the invention, preferably, the method further comprises: loading a metal promoter on the nickel-aluminum alloy by an impregnation method, the metal is at least one selected from the group consisting of group IA, IIA, IIIA, IB and IIB metals.

In the method provided by the invention, the selection ranges of various kinds of the metal and the metal promoter may be identical with the selection ranges according to the first aspect mentioned above, the content will not be repeatedly described herein.

In the method provided by the present invention, the impregnation method is not particularly limited, it may be an equal volume impregnation or a supersaturated impregnation. When the method further comprises introducing a metal promoter, the sulfur-containing organic molybdenum compound and the metal promoter may be simultaneously introduced into the nickel-aluminum alloy by co-impregnation, or separately introduced into the nickel-aluminum alloy by the stepwise impregnation, the sequence of introducing two compounds are not particularly limited in the invention.

Preferably, the sulfur-containing organic molybdenum compound and the metal promoter are introduced into the nickel-aluminum alloy by co-impregnation.

According to the method provided by the invention, preferably, the method comprises: impregnating the nickel-aluminum alloy with an impregnation liquid comprising a sulfur-containing organic molybdenum compound and optionally a metal promoter, then drying the nickel-aluminum alloy. The formulation method of the impregnation liquid is well-known for those skilled in the art.

The invention has a wide selection range for a solvent in the impregnation liquid, provided that the solvent provides an environment required for the impregnation, preferably, the solvent in the impregnation liquid is an organic solvent, more preferably selected from C1-C10 alkane and/or alcohol, further preferably at least one selected from the group consisting of n-hexane, n-heptane, n-octane, n-nonane, cyclohexane, ethanol, methanol and isopropanol.

According to the present invention, preferably, the concentrations of the sulfur-containing organic molybdenum compound and the metal promoter in the impregnation liquid are independently within the range of 0.1-3 mol/L.

Preferably, the metal promoter is used in such an amount that in the prepared hydrogenation catalyst, the content of the metal promoter calculated in terms of metal oxides is within the range of 1.5%-7%, more preferably within the range of 2%-5.5%, based on the total dry basis weight of the hydrogenation catalyst.

According to the invention, preferably, the sulfur-containing organic molybdenum compound and the nickel-aluminum alloy are used in such an amount that the content of the sulfur-containing organic molybdenum compound calculated in terms of molybdenum trioxide in the prepared hydrogen catalyst is 6%-18%, more preferably 8%-17%, based on the total dry basis weight of the hydrogenation catalyst. Based on the disclosure, those skilled in the art know how to control the content of the sulfur-containing organic molybdenum compound in the finally produced hydrogenation catalyst during the impregnation process, the content can be determined based on the pore saturation impregnation.

According to the present invention, when the nickel-aluminum alloy does not include the silicon modification, it is preferable that the sulfur-containing organic molybdenum compound and the nickel-aluminum alloy are used in such an amount that in the produced hydrogenation catalyst, the content of Al calculated in terms of alumina is within the range of 63%-86%, preferably within the range of 69%-81%; the content of Ni calculated in terms of nickel oxide is within the range of 8%-20%, preferably within the range of 9%-16%; the content of Mo calculated in terms of molybdenum trioxide is within the range of 6%-20%, preferably within the range of 8%-18%, based on the total dry basis weight of the hydrogenation catalyst.

According to the present invention, when the nickel-aluminum alloy includes the silicon modification, it is preferable that the sulfur-containing organic molybdenum compound and the nickel-aluminum alloy are used in such an amount that in the produced hydrogenation catalyst, the content of Al calculated in terms of alumina is within the range of 62%-85%, more preferably within the range of 68%-80%; the content of Ni calculated in terms of nickel oxide is within the range of 8%-18%, more preferably within the range of 9%-15%; the content of Mo calculated in terms of molybdenum trioxide is within the range of 6%-18%, more preferably within the range of 8%-17%; the content of Si calculated in terms of silicon dioxide is within the range of 0.2%-3%, more preferably within the range of 0.5%-2%, based on the total dry basis weight of the hydrogenation catalyst.

According to a preferred embodiment of the invention, the drying is vacuum drying, more preferably, the drying conditions comprise: a vacuum degree of 0.5-5 torr, preferably 1-3 torr, a drying temperature of 60-150°C, preferably 70-120°C, and a drying time of 2-120 h, preferably 4-8 h.

According to a particularly preferred embodiment of the invention, a preparation method for the hydrogenation catalyst comprises:
(1) Subjecting the nickel-aluminum alloy to a vacuumization treatment, then introducing a gas-phase alkoxysilane to perform a silicon modification treatment, subsequently introducing an inert gas to carry out the replacement treatment, to obtain a silicon modified nickel-aluminum alloy support;
(2) Preparing an impregnation liquid comprising a sulfur-containing organic molybdenum compound and a metal promoter, and immersing the silicon modified nickel-aluminum alloy support obtained from step (1) in the impregnation liquid, then drying the nickel-aluminum alloy support to prepared the hydrogenation catalyst;

Wherein the sulfur-containing organic molybdenum compound is molybdenum dialkyl dithiophosphate and/or molybdenum dialkyl dithiocarbamate.

The third aspect of the present invention provides a hydrogenation catalyst prepared with the method according to the second aspect.

The fourth aspect of the present invention provides an use of the hydrogenation catalyst according to the first aspect or the third aspect in oil product hydroprocessing, more preferably in the oil product hydrofinishing. When the catalyst provided by the invention is used in the hydrogenation of an oil product, it has desirable hydrotreating capacity and stability. The choice of different metal promoter components also provides additional advantages to the catalysts provided by the invention. For example, the catalysts are particularly suitable for the hydrogenation decarbonization of oil products when the metallo-gallium-organic compound is used as a metal promoter in the catalysts. The catalysts are particularly suitable in the hydrodesulphurization of oil products when the metallo-zinc-organic compound is used as a metal promoter.

In the present invention, the hydrofinishing has conventional meaning in the field. For example, the hydrofinishing includes, but is not limited to, hydrodesulfurization, hydrogenation decarbonization, hydrodeoxygenation, hydrodemetallation, saturated hydrogenation of olefins and aromatic hydrocarbons.

The fifth aspect of the present invention provides an oil product hydrotreating method, the method comprises: contacting and reacting the oil product with the hydrogenation catalyst according to the first aspect or the third aspect under the hydrotreating conditions.

The hydrotreating method provided by the invention may be implemented in a fixed bed reactor, a fluidized bed reactor or an ebullated bed reactor, preferably in a fixed bed reactor.

The oil product is selected from a wide range and may be any conventional oil product in the art which requires a hydroprocessing. Preferably, the oil product is at least one selected from the group consisting of diesel oil, wax oil and residual oil.

Preferably, the oil product is a secondary processing oil product.

Preferably, the oil product has a nitrogen content by mass within the range of 300-3,000 µg/g, a sulfur content by mass within the range of 2,000-30,000 µg/g, and an aromatic hydrocarbon content within the range of 15wt%-80wt%, more preferably within the range of 30wt%-70wt%.

The hydrotreating conditions are selected from wide ranges, preferably, the hydrotreating conditions comprise: a reaction hydrogen pressure of 2-20MPa, more preferably 6-16MPa; a hydrogen/oil volume ratio of (200-1,500) : 1, more preferably (500-1,200) : 1; a gas hourly volume space velocity within the range of 0.2-3h⁻¹, more preferably within the range of 0.5-2h⁻¹, and a reaction temperature within the range of 240-420°C, more preferably within the range of 280-400°C.

According to the hydroprocessing method provided by the present invention, the oil product may be subjected to a single stage hydrotreating using the catalyst provided by the invention, and may be subjected to the multiple stages hydrotreating as required.

In a single stage hydrotreating process, the hydrogenation catalyst preferably comprises a first hydrogenation catalyst and a second hydrogenation catalyst (the filling volume ratio of two catalysts may be selected from a wide range, for example, it may be (10-90) : (10-90) ), the metal promoter in the first hydrogenation catalyst is a metallo-zinc-organic compound; and the metal promoter in the second hydrogenation catalyst is a metallo-gallium-organic compound. An use of the preferred embodiment is more conducive to the removal of sulfur and nitrogen from the inferior oil products.

When the multiple stages hydrotreating is adopted, it may be advantageous to enhance the hydrotreating results provided that at least one stage of hydrotreating is performed by using a catalyst provided by the invention. The catalysts adopted in the other stages of hydrotreating may be various hydrogenation catalysts conventionally used in the art, or the hydrogenation catalysts provided by the invention.

Preferably, the method comprises the following steps:
(1) Carrying out a first hydrogenation reaction on the oil product and a first hydrogenation catalyst;
(2) Performing a second hydrogenation reaction on a product obtained from the first hydrogenation reaction and a second hydrogenation catalyst;

Wherein at least one of the first hydrogen generation catalyst and the second hydrogen generation catalyst is selected from the hydrogenation catalysts provided by the invention; preferably, the first hydrogen generation catalyst and the second hydrogen generation catalyst are each independent the hydrogenation catalyst provided by the invention.

The filling volume ratio of a first hydrogenation catalyst and a second hydrogenation catalyst may be selected from a wide range, for example, it may be (10-90) : (10-90).

Preferably, the metal promoter in the first hydrogenation catalyst is a metallo-zinc-organic compound; the metal promoter of the second hydrogenation catalyst is a metallo-gallium-organic compound. An use of the preferred embodiment is more conducive to removing sulfur and nitrogen from the inferior oil products.

Preferably, the reaction temperature of the first hydrogenation reaction is within the range of 280-390°C, and the reaction temperature of the second hydrogenation reaction is within the range of 290-400°C.

Further, the hydrogenation catalyst of the invention merely needs an activation treatment prior to the use. Preferably, the activation conditions comprise: a hydrogen pressure of 0.1-1MPa, preferably 0.2-0.8MPa, a treatment temperature of 80-250°C, preferably 120-200°C, a treatment time of 0.5-5h, preferably 1-3h, a hydrogen gas flow rate of 3-15 mL/h·g⁻¹ hydrogenation catalyst, preferably 5-10 mL/h·g⁻¹ hydrogenation catalyst.

The preparation process and product properties of the method in the invention will be further illustrated below with reference to the examples and comparative examples, but the following examples do not impose limitations to the method of the invention.

In the hydrogenation catalysts in the following examples and comparative examples, the dry basis contents of components in the catalysts were tested by the ICP-AES method, with the specific conditions described above.

The specific surface area, average pore diameter and pore volume were measured by using the nitrogen gas isothermal adsorption-desorption method.

Two nickel-aluminum alloys were selected in the examples and comparative examples of the present invention.

Properties of nickel-aluminum alloy-I included: an average particle size of 4.1mm, a pore volume of 0.72 cm³/g, the support had an average pore diameter of 8.3nm, the content of a pore volume of small pores having a pore diameter less than 3nm was 7.6%, a mass fraction of Al was 83.6%, and a mass fraction of Ni was 16.4%.

Properties of nickel-aluminum alloy-II included: an average particle size of 3.2mm, a pore volume of 0.68 cm³/g, the support had an average pore diameter of 7.5nm, the content of a pore volume of small pores having a pore diameter less than 3nm was 8.1%, a mass fraction of Al was 80.1%, and a mass fraction of Ni was 19.9%.

### Example 1

100.0g of nickel-aluminum alloy-I particles were put into a vacuum drying oven, the vacuum degree was controlled at 0.2 torr, the temperature was 80°C, and the processing time was 4.0 hours.

The temperature of the vacuum drying oven was increased to 220°C, nitrogen gas and methyl trimethoxysilane gas were introduced into the vacuum drying oven, the partial pressure of the methyl trimethoxysilane gas was 0.1 MPa, the gas flow rate (excluding nitrogen gas, hereinafter the same) was 400 mL/min, and the gas introduction time was 3 hours.

The temperature of said drying oven was adjusted to 160°C, the air in said drying oven was replaced with nitrogen gas at the nitrogen gas introduction rate of 200 mL/min for 1.0 hour, a modified nickel-aluminum alloy support was obtained, which was denoted as L-1.

An impregnation liquid Q-1 was prepared with 20.0g of molybdenum diisopropyl dithiophosphate, 6.0g of zinc dibutyl dithiophosphate, and 70.0g of n-heptane.

The modified nickel-aluminum alloy support L-1 was soaked in the impregnation liquid Q-1, followed by vacuum drying at 70°C under a controlled vacuum degree of 1.0 torr for 4.0 hours. The obtained catalyst was designated as Cat-1.

### Example 2

100.0g of nickel-aluminum alloy-I particles were put into a vacuum drying oven, the vacuum degree was controlled at 0.4 torr, the temperature was 100°C, and the processing time was 5.0 hours.

The temperature of the vacuum drying oven was increased to 240°C, nitrogen gas and triethoxysilane were introduced into the vacuum drying oven, the partial pressure of the triethoxysilane was 0.1 MPa, the gas flow rate was 450 mL/min, and the gas introduction time was 4.0 hours.

The temperature of said drying oven was adjusted to 170°C, the air in said drying oven was replaced with nitrogen gas at the nitrogen gas introduction rate of 200 mL/min for 1.5 hours, a modified nickel-aluminum alloy support was obtained, which was denoted as L-2.

An impregnation liquid Q-2 was prepared with 25.0g of molybdenum dibutyl dithiophosphate oxysulfide, 8.0g of zinc diisooctyl dithiophosphate and 70.0g of n-octane.

The modified nickel-aluminum alloy support L-2 was soaked in the impregnation liquid Q-2, followed by vacuum drying at 90°C under a controlled vacuum degree of 1.0 torr for 4.0 hours. The obtained catalyst was designated as Cat-2.

### Example 3

100.0g of nickel-aluminum alloy-I particles were put into a vacuum drying oven, the vacuum degree was controlled at 0.5 torr, the temperature was 120°C, and the processing time was 5.0 hours.

The temperature of the vacuum drying oven was increased to 270°C, nitrogen gas and isobutyl triethoxysilane were introduced into the vacuum drying oven, the partial pressure of the isobutyl triethoxysilane was 0.1MPa, the gas flow rate was 500 mL/min, and the gas introduction time was 5.0 hours.

The temperature of said drying oven was adjusted to 200°C, the air in said drying oven was replaced with nitrogen gas at the nitrogen gas introduction rate of 200mL/min for 2.0 hours, a modified nickel-aluminum alloy support was obtained, which was denoted as L-3.

An impregnation liquid Q-3 was prepared with 20.0g of molybdenum diisopropyl dithiocarbamate, 4.0g of zinc diethyl dithiocarbamate and 70.0g of n-nonane.

The modified nickel-aluminum alloy support L-3 was soaked in the impregnation liquid Q-3, followed by vacuum drying at 120°C under a controlled vacuum degree of 1.0 torr for 4.0 hours. The obtained catalyst was designated as Cat-3.

### Example 4

100.0g of nickel-aluminum alloy-II particles were put into a vacuum drying oven, the vacuum degree was controlled at 0.4 torr, the temperature was 100°C, and the processing time was 5.0 hours.

The temperature of the vacuum drying oven was increased to 240°C, nitrogen gas and triethoxysilane gas were introduced into the vacuum drying oven, the partial pressure of the triethoxysilane gas was 0.1MPa, the gas flow rate was 450mL/min, and the gas introduction time was 4.0 hours.

The temperature of said drying oven was adjusted to 170°C, the air in said drying oven was replaced with nitrogen gas at the nitrogen gas introduction rate of 200mL/min for 1.5 hours, a modified nickel-aluminum alloy support was obtained, which was denoted as L-4.

An impregnation liquid Q-4 was prepared with 25.0g of molybdenum dibutyl dithiophosphate oxysulfide, 8.0g of gallium acetylacetonate, 40.0g of n-heptane and 30.0g of ethanol.

The modified nickel-aluminum alloy support L-4 was soaked in the impregnation liquid Q-4, followed by vacuum drying at 90°C under a controlled vacuum degree of 1.0 torr for 4.0 hours. The obtained catalyst was designated as Cat-4.

### Example 5

100.0g of nickel-aluminum alloy-II particles were put into a vacuum drying oven, the vacuum degree was controlled at 0.5 torr, the temperature was 120°C, and the processing time was 5.0 hours.

The temperature of the vacuum drying oven was increased to 270°C, nitrogen gas and isobutyl triethoxysilane gas were introduced into the vacuum drying oven, the partial pressure of the isobutyl triethoxysilane gas was 0.1 MPa, the gas flow rate was 500 mL/min, and the gas introduction time was 5.0 hours.

The temperature of said drying oven was adjusted to 200°C, the air in said drying oven was replaced with nitrogen gas at the nitrogen gas introduction rate of 200mL/min for 2.0 hours, a modified nickel-aluminum alloy support was obtained, which was denoted as L-5.

An impregnation liquid Q-5 was prepared with 20.0g of molybdenum diisopropyl dithiocarbamate, 6.0g of gallium ethoxylate, 40.0g of n-nonane and 30.0g of ethanol.

The modified nickel-aluminum alloy support L-5 was soaked in the impregnation liquid Q-5, followed by vacuum drying at 120°C under a controlled vacuum degree of 1.0 torr for 4.0 hours. The obtained catalyst was designated as Cat-5.

### Example 6

100.0g of nickel-aluminum alloy-II particles were put into a vacuum drying oven, the vacuum degree was controlled at 0.5 torr, the temperature was 120°C, and the processing time was 5.0 hours.

The temperature of the vacuum drying oven was increased to 380°C, nitrogen gas and n-octyltriethoxysilane gas were introduced into the vacuum drying oven, the partial pressure of the n-octyltriethoxysilane gas was 0.1 MPa, the gas flow rate was 600mL/min, and the gas introduction time was 5.0 hours.

The temperature of said drying oven was adjusted to 200°C, the air in said drying oven was replaced with nitrogen gas at the nitrogen gas introduction rate of 200 mL/min for 2.0 hours, a modified nickel-aluminum alloy support was obtained, which was denoted as L-6.

An impregnation liquid Q-6 was prepared with 25.0g of molybdenum dibutyl dithiocarbamate, 8.0g of gallium isopropoxide and 60.0g of n-decane.

The modified nickel-aluminum alloy support L-6 was soaked in the impregnation liquid Q-6, followed by vacuum drying at 120°C under a controlled vacuum degree of 1.0 torr for 4.0 hours. The obtained catalyst was designated as Cat-6.

### Example 7

100.0g of nickel-aluminum alloy-I particles were put into a vacuum drying oven, the vacuum degree was controlled at 0.5 torr, the temperature was 120°C, and the processing time was 5.0 hours. The obtained nickel-aluminum alloy support was denoted as L-7.

An impregnation liquid Q-7 was prepared with 20.0g of molybdenum diisopropyl dithiocarbamate, 4.0g of zinc diethyl dithiocarbamate and 75.0 g of n-octane.

The modified nickel-aluminum alloy support L-7 was soaked in the impregnation liquid Q-7, followed by vacuum drying at 120°C under a controlled vacuum degree of 1.0 torr for 4.0 hours. The obtained catalyst was designated as Cat-7.

### Example 8

100.0g of nickel-aluminum alloy-II particles were put into a vacuum drying oven, the vacuum degree was controlled at 0.5 torr, the temperature was 120°C, and the processing time was 5.0 hours. The obtained nickel-aluminum alloy support was denoted as L-8.

An impregnation liquid Q-8 was prepared with 25.0g of molybdenum dibutyl dithiocarbamate, 8.0g of gallium isopropoxide and 60.0g of n-decane.

The modified nickel-aluminum alloy support L-8 was soaked in the impregnation liquid Q-8, followed by vacuum drying at 120°C under a controlled vacuum degree of 1.0 torr for 4.0 hours. The obtained catalyst was designated as Cat-8.

### Example 9

The nickel-aluminum alloy support L-1 was prepared with the same method as that in Example 1.

An impregnation liquid Q-9 was prepared with 26.0g of molybdenum diisopropyl dithiophosphate and 70.0g of n-heptane.

The nickel-aluminum alloy support L-1 was soaked in the impregnation liquid Q-9, followed by vacuum drying at 70°C under a controlled vacuum degree of 1.0 torr for 4.0 hours. The obtained catalyst was designated as Cat-9.

### Example 10

The nickel-aluminum alloy support L-1 was prepared with the same method as that in Example 4.

An impregnation liquid Q-10 was prepared with 33.0g of molybdenum dibutyl dithiophosphate oxysulfide, 40.0g of n-heptane and 30.0g of ethanol.

The nickel-aluminum alloy support L-4 was soaked in the impregnation liquid Q-10, followed by vacuum drying at 90°C under a controlled vacuum degree of 1.0 torr for 4.0 hours. The obtained catalyst was designated as Cat-10.

### Example 11

100.0g of nickel-aluminum alloy-I particles were put into a vacuum drying oven, the vacuum degree was controlled at 0.2 torr, the temperature was 80°C, and the processing time was 4.0 hours.

The nickel-aluminum alloy-I was impregnated with 60.0g of trimethylsilane, the temperature of said drying oven was adjusted to 170°C, the air in said drying oven was replaced with nitrogen gas at the nitrogen gas introduction rate of 200 mL/min for 1.5 hours, a modified nickel-aluminum alloy support was obtained, which was denoted as L-11.

An impregnation liquid Q-11 was prepared with 20.0g of molybdenum diisopropyl dithiophosphate, 6.0g of zinc dibutyl dithiophosphate and 70.0g of n-heptane.

The modified nickel-aluminum alloy support L-11 was soaked in the impregnation liquid Q-11, followed by vacuum drying at 70°C under a controlled vacuum degree of 1.0 torr for 4.0 hours. The obtained catalyst was designated as Cat-11.

### Comparative Example 1

The modified nickel-aluminum alloy support L-3 was prepared with the same method as that in Example 3.

An impregnation liquid DQ-1 was prepared with 20.0g of molybdenum hexacarbonyl, 7.0 g of zinc octoate and 70.0g of toluene.

The modified nickel-aluminum alloy support L-3 was soaked in the impregnation liquid DQ-1, followed by vacuum drying at 120°C under a controlled vacuum degree of 1.0 torr for 4.0 hours. An oxidation state catalyst was obtained.

20.0g of the oxidation state catalyst was weighed, put into a tubular reactor, and subjected to the conventional vulcanization treatment under the following treatment conditions: the vulcanization liquid was a cyclohexane solution containing dithiodimethyl with the mass fraction of 5.0%, the dosage of the vulcanization liquid was 40.0 g/h, the hydrogen gas pressure was 4.0MPa, the flow rate of hydrogen gas was 200 mL/min, the vulcanization temperature was 340°C, the vulcanization time was 6.0 hours, the obtained catalyst was designated as DCT-1.

### Comparative Example 2

The modified nickel-aluminum alloy support L-3 was prepared with the same method as that in Example 3.

12.0g of molybdenum disulfide powder and 2.0g of zinc sulfide powder were taken, and dissolved in a mixed solution consisting of 40.0g of n-octane and 30.0g of dimethyl disulfide (DMDS), the prepared impregnation liquid was denoted as DQ-2.

The modified nickel-aluminum alloy support L-3 was soaked in the impregnation liquid DQ-2, followed by vacuum drying at 120°C under a controlled vacuum degree of 1.0 torr for 4.0 hours. The obtained catalyst was designated as DCT-2.

### Comparative Example 3

The modified nickel-aluminum alloy support L-6 was prepared with the same method as that in Example 6.

An impregnation liquid DQ-3 was prepared with 22.0g of molybdenum carbonyl, 6.0g of gallium ethoxide, 60.0g of cyclohexane and 10.0g of ethanol.

The modified nickel-aluminum alloy support L-6 was soaked in the impregnation liquid DQ-3, followed by vacuum drying at 120°C under a controlled vacuum degree of 1.0 torr for 4.0 hours. An oxidation state catalyst was obtained.

20.0g of the oxidation state catalyst was weighed, put into a tubular reactor, and subjected to the conventional vulcanization treatment under the following treatment conditions: the vulcanization liquid was a cyclohexane solution containing dithiodimethyl with the mass fraction of 5.0%, the dosage of the vulcanization liquid was 40.0 g/h, the hydrogen gas pressure was 4.0 MPa, the flow rate of hydrogen gas was 200 mL/min, the vulcanization temperature was 340°C, the vulcanization time was 6.0 hours, the obtained catalyst was designated as DCT-3.

### Comparative Example 4

The modified nickel-aluminum alloy support L-6 was prepared with the same method as that in Example 6.

13.0g of molybdenum disulfide powder and 6.0g of gallium ethoxylate were taken, and dissolved in a mixed solution consisting of 30.0g of isopropanol and 40.0g of dimethyl disulfide, the prepared impregnation liquid was denoted as DQ-4.

The modified nickel-aluminum alloy support L-6 was soaked in the impregnation liquid DQ-4, followed by vacuum drying at 120°C under a controlled vacuum degree of 1.0 torr for 4.0 hours. The obtained catalyst was designated as DCT-4.

**Table 1 Composition (catalyst dry basis) and properties of the catalysts obtained in examples and comparative examples**

| Catalysts | Al₂O ₃ wt% | NiO wt % | SiO ₂ wt % | MoO ₃ wt% | Zn O wt % | Ga₂O ₃ wt% | Avera ge pore diame ter, nm | Pore volum e, cm³/g | Content of pore volume of pores having a pore dimeter of 0-3nm, % |
|---|---|---|---|---|---|---|---|---|---|
| Cat-1 | 72.7 | 12.6 | 0.8 | 10.4 | 3.3 | 0 | 9.1 | 0.40 | 3.0 |
| Cat-2 | 69.4 | 11.9 | 1.3 | 13.1 | 4.1 | 0 | 8.8 | 0.42 | 2.6 |
| Cat-3 | 72.6 | 12.5 | 1.2 | 11.2 | 2.3 | 0 | 9.0 | 0.41 | 2.5 |
| Cat-4 | 69.8 | 11.8 | 0.9 | 13.1 | 0 | 4.2 | 8.3 | 0.38 | 3.1 |
| Cat-5 | 71.9 | 12.2 | 1.2 | 11.1 | 0 | 3.4 | 7.9 | 0.37 | 2.8 |
| Cat-6 | 70.3 | 11.3 | 0.9 | 13.1 | 0 | 4.2 | 7.8 | 0.38 | 3.4 |
| Cat-7 | 74.4 | 13.4 | 0 | 10.0 | 2.1 | 0 | 7.4 | 0.41 | 10.8 |
| Cat-8 | 71.2 | 12.9 | 0 | 12.0 | 0 | 3.9 | 8.3 | 0.43 | 9.3 |
| Cat-9 | 72.2 | 12.7 | 1.0 | 14.1 | 0 | 0 | 9.2 | 0.40 | 2.9 |
| Cat-10 | 70.5 | 11.9 | 1.0 | 16.5 | 0 | 0 | 9.0 | 0.42 | 2.6 |
| Cat-11 | 72.6 | 12.6 | 0.9 | 10.4 | 3.3 | 0 | 8.5 | 0.44 | 7.5 |
| DCT-1 | 71.6 | 12.3 | 0.9 | 11.1 | 4.0 | 0 | 9.4 | 0.39 | 3.3 |
| DCT-2 | 72.2 | 12.5 | 0.9 | 11.2 | 3.3 | 0 | 9.3 | 0.41 | 3.5 |
| DCT-3 | 71.4 | 12.2 | 1.0 | 12.0 | 0 | 3.4 | 8.7 | 0.40 | 2.9 |
| DCT-4 | 70.6 | 12.8 | 1.0 | 11.9 | 0 | 3.5 | 8.6 | 0.38 | 3.2 |

### Test Examples 1-8

The catalysts obtained in Examples 1-11 were filled in a grading scheme (see Table 3), the properties of the secondary processing oil in use were shown in Table 2. A fixed bed process was adopted, and a hydrodesulfurization catalyst and a hydrogenation decarbonization catalyst (the filling volume ratio was 1: 1) were sequentially filled along the material flow direction.

### Activation of the catalysts

20.0 g of catalysts Cat-1, Cat-2, Cat-3, Cat-4, Cat-5, Cat-6, Cat-7, Cat-8, Cat-9, Cat-10 and Cat-11 were respectively weighed, and put into a tubular reactor, wherein the activation conditions included: a temperature of 120°C, a hydrogen gas pressure of 0.5 MPa, a hydrogen gas flow rate of 150.0 mL/min, and an activation time of 2.0 hours.

### Evaluation of catalysts

The evaluation conditions were as follows: the hydrogen gas pressure was 10.0 MPa, the hydrogen gas flow rate was 500 mL/min, the oil feeding amount was 50.0 g/h, the total hourly volume space velocity of the catalyst was 1.0h⁻¹, the reaction temperature of the desulfurization catalyst bed was 320°C, the reaction temperature of the denitrification catalyst bed was 350°C, after reaction for 1,200 hours, the analysis results of the obtained samples were shown in Table 3.

### Comparative Test Examples 1-2

The catalysts obtained from Comparative Examples 1-4 were filled in a grading scheme (see Table 3), the properties of the secondary processing oil in use were shown in Table 2. A fixed bed process was adopted, and a hydrodesulfurization catalyst and a hydrogenation decarbonization catalyst (the filling volume ratio was 1: 1) were sequentially filled along the material flow direction.

The activation and evaluation of the catalysts were the same as those in Test Examples 1-6.

**Table 2 Properties of the feedstock oil**

| Properties of feedstock | |
|---|---|
| Density(20°C)/g·cm⁻³ | 0.958 |
| S/µg·g⁻¹ | 8551 |
| N/µg·g⁻¹ | 1452 |
| C, wt% | 87.4 |
| H, wt% | 11.6 |
| Composition of hydrocarbons | |
| Alkanes, wt% | 17.6 |
| Cycloalkanes, wt% | 21.3 |
| Aromatic hydrocarbons, wt% | 61.1 |
| Monocyclic aromatic hydrocarbons, wt% | 18.6 |
| Bicyclic aromatic hydrocarbons, wt% | 31.2 |
| Tricyclic aromatic hydrocarbons, wt% | 11.3 |

**Table 3. Evaluation results**

| | Desulfurization catalyst | Denitrogenation catalyst | Sulfur content, µg/g | Nitrogen content , µg/g | Aromatic hydrocarbons , wt% | Aromatic hydrocarbons with two or more rings, wt% |
|---|---|---|---|---|---|---|
| Test Example 1 | Cat-1 | Cat-4 | 155 | 5.6 | 38.4 | 2.9 |
| Test Example 2 | Cat-2 | Cat-5 | 121 | 4.0 | 35.1 | 2.2 |
| Test Example 3 | Cat-3 | Cat-6 | 87 | 2.4 | 33.7 | 1.7 |
| Test Example 4 | Cat-7 | Cat-8 | 251 | 18.5 | 44.2 | 3.7 |
| Test Example 5 | Cat-9 | Cat-10 | 336 | 26.8 | 46.7 | 4.9 |
| Test Example 6 | Cat-11 | Cat-4 | 209 | 12.3 | 40.5 | 4.1 |
| Test Example 7 | Cat-3 | Cat-3 | 69 | 6.5 | 37.8 | 2.4 |
| Test Example 8 | Cat-6 | Cat-6 | 193 | 1.9 | 39.1 | 2.2 |
| Comparative Test Example 1 | DCT-1 | DCT-3 | 509 | 40.1 | 47.6 | 7.3 |
| Comparative Test Example 2 | DCT-2 | DCT-4 | 369 | 66.5 | 50.8 | 11.0 |

As can be seen from the results in Table 3, the treatment of heavy secondary processing crude oil using the hydrogenation catalysts of the present invention has desirable effects of hydrodesulfurization, hydrogenation decarbonization and saturating aromatic hydrocarbons.

## Claims

1. A hydrogenation catalyst comprising a support and an active component, wherein the support comprises a nickel-aluminum alloy, and the active component comprises a sulfur-containing organic molybdenum compound.

2. The hydrogenation catalyst according to claim 1, wherein the sulfur-containing organic molybdenum compound is molybdenum dialkyl dithiophosphate and/or molybdenum dialkyl dithiocarbamate;
preferably, the molybdenum dialkyl dithiophosphate is at least one selected from the group consisting of molybdenum diisopropyl dithiophosphate, molybdenum dibutyl dithiophosphate, molybdenum diisooctyl dithiophosphate, molybdenum diisobutyl dithiophosphate, molybdenum dipropyl dithiophosphate, molybdenum dipentyl dithiophosphate, molybdenum dihexyl dithiophosphate and molybdenum diheptyl dithiophosphate;
preferably, the molybdenum dialkyl dithiocarbamate is at least one selected from the group consisting of molybdenum diisopropyl dithiocarbamate, molybdenum dibutyl dithiocarbamate, molybdenum dipentyl dithiocarbamate, molybdenum dihexyl dithiocarbamate, molybdenum diheptyl dithiocarbamate and molybdenum dioctyl dithiocarbamate.

3. The hydrogenation catalyst according to claim 1 or 2, wherein the content of Al calculated in terms of alumina is within the range of 63%-86%, preferably within the range of 69%-81%; the content of Ni calculated in terms of nickel oxide is within the range of 8%-20%, preferably within the range of 9%-16%; the content of Mo calculated in terms of molybdenum trioxide is within the range of 6%-20%, preferably within the range of 8%-18%, based on the total dry basis weight of the hydrogenation catalyst.

4. The hydrogenation catalyst according to any one of claims 1-3, wherein the support comprises a silicon-modified nickel-aluminum alloy, preferably comprises an organosilicon-modified nickel-aluminum alloy;
preferably, the organosilicon is selected from alkoxysilane, further preferably at least one selected from the group consisting of methyl trimethoxysilane, triethoxysilane, methyl triethoxysilane, propyl trimethoxysilane, butyl triethoxysilane and octyl triethoxysilane;
preferably, the content of Al calculated in terms of alumina is within the range of 62%-85%, more preferably within the range of 68%-80%; the content of Ni calculated in terms of nickel oxide is within the range of 8%-18%, more preferably within the range of 9%-15%; the content of Mo calculated in terms of molybdenum trioxide is within the range of 6%-18%, more preferably within the range of 8%-17%; the content of Si calculated in terms of silicon dioxide is within the range of 0.2%-3%, more preferably within the range of 0.5%-2%, based on the total dry basis weight of the hydrogenation catalyst.

5. The hydrogenation catalyst according to any one of claims 1-4, wherein the hydrogenation catalyst further comprises a metal promoter, the metal is at least one selected from the group consisting of group IA, IIA, IIIA, IB and IIB metals, preferably at least one selected from the group consisting of Zn, Ga, Mg and Cu; preferably, the metal promoter is a metallo-organic compound, more preferably a metallo-zinc-organic compound and/or a metallo-gallium-organic compound, most preferably at least one selected from the group consisting of triethyl gallium, tri-isopropyl gallium, tri-tert-butyl gallium, gallium acetylacetonate, gallium ethoxide, isopropyl gallium, zinc dialkyl dithiophosphate and zinc dialkyl dithiocarbamate.

6. The hydrogenation catalyst according to claim 5, wherein the content of said metal promoter calculated in terms of metal oxide is within the range of 1.5%-7%, preferably within the range of 2%-5.5%, based on the total dry basis weight of the hydrogenation catalyst.

7. The hydrogenation catalyst according to any one of claims 1-6, wherein the hydrogenation catalyst has an average pore diameter within the range of 4-15nm, preferably within the range of 6-12nm;
preferably, a pore volume of pores having a pore diameter of 0-3nm constitutes 1%-10%, more preferably 2%-5% of the total pore volume of the hydrogenation catalyst.

8. A preparation method for a hydrogenation catalyst, the method comprises the following steps:
loading a sulfur-containing organic molybdenum compound on a nickel-aluminum alloy by an impregnation method, and then subjecting to drying.

9. The method according to claim 8, wherein the sulfur-containing organic molybdenum compound is molybdenum dialkyl dithiophosphate and/or molybdenum dialkyl dithiocarbamate;
preferably, the molybdenum dialkyl dithiophosphate is at least one selected from the group consisting of molybdenum diisopropyl dithiophosphate, molybdenum dibutyl dithiophosphate, molybdenum diisooctyl dithiophosphate, molybdenum diisobutyl dithiophosphate, molybdenum dipropyl dithiophosphate, molybdenum dipentyl dithiophosphate, molybdenum dihexyl dithiophosphate and molybdenum diheptyl dithiophosphate;
preferably, the molybdenum dialkyl dithiocarbamate is at least one selected from the group consisting of molybdenum diisopropyl dithiocarbamate, molybdenum dibutyl dithiocarbamate, molybdenum dipentyl dithiocarbamate, molybdenum dihexyl dithiocarbamate, molybdenum diheptyl dithiocarbamate and molybdenum dioctyl dithiocarbamate.

10. The method of claim 8 or 9, wherein the content of aluminum element is within the range of 50wt%-95wt%, and the content of nickel element is within the range of 5wt%-50wt%, preferably, the content of aluminum element is 70wt%-90wt%, and the content of nickel element is within the range of 10wt%-30wt%, based on the total amount of the nickel-aluminum alloy;
preferably, the nickel-aluminum alloy has a pore volume within the range of 0.4-1.0 cm³/g, more preferably within the range of 0.5-0.9 cm³/g, and an average pore diameter within the range of 4-12 nm, more preferably within the range of 6-10 nm, wherein the volume fraction of small pores having a pore diameter smaller than 3.0nm is not more than 20%, more preferably within the range of 5-10%.

11. The method according to any one of claims 8-10, wherein the sulfur-containing organic molybdenum compound and the nickel-aluminum alloy are used in an amount such that the content of Mo calculated in terms of molybdenum trioxide is within the range of 6%-18%, preferably within the range of 8%-17%, based on the total dry basis weight of the hydrogenation catalyst.

12. The method according to any one of claims 8-11, wherein the method further comprises: silicon-modifying the nickel-aluminum alloy with a silicon-containing compound, preferably an organic silicon-containing compound;
preferably, the silicon-containing compound is selected from alkyl silane and/or alkoxy silane, more preferably alkoxy silane;
preferably, the alkoxysilane is at least one selected from the group consisting of methyl trimethoxysilane, triethoxysilane, methyl triethoxysilane, propyl trimethoxysilane, butyl triethoxysilane and octyl triethoxysilane;
preferably, the organosilicon modification causes that the content of organosilicon compounds calculated in terms of silicon dioxide in the prepared hydrogenation catalyst is within the range of 0.2-3%, preferably within the range of 0.5-2%, based on the total dry basis weight of the hydrogenation catalyst.

13. The method according to claim 12, wherein silicon-modifying the nickel-aluminum alloy comprises: contacting the nickel-aluminum alloy with a silicon-containing compound to carry out the silicon modification;
preferably, silicon-modifying the nickel-aluminum alloy comprises: contacting the nickel-aluminum alloy with a gas-phase silicon-containing compound to carry out the silicon modification;
preferably, the silicon modification conditions comprise: a temperature within the range of 160-400°C, more preferably within the range of 180-350°C, a time of 1-10 hours, more preferably 2-8 hours; the flow rate of the gas-phase silicon-containing compound is within the range of 1-20 mL/min·g⁻¹ nickel-aluminum alloy, more preferably within the range of 3-15 mL/min·g⁻¹ nickel-aluminum alloy; the partial pressure of the gas-phase silicon-containing compound is within the range of 0.02-1 MPa, more preferably within the range of 0.05-0.5 MPa.

14. The method according to claim 12 or 13, wherein the method further comprises:
subjecting the nickel-aluminum alloy to a vacuumization treatment prior to the silicon modification and subjecting the nickel-aluminum alloy to a displacement treatment after the silicon modification;
preferably, the vacuumization treatment conditions comprise: a temperature within the range of 50-200°C, more preferably within the range of 80-150°C; a vacuum degree within the range of 0.05-1 torr, more preferably within the range of 0.1-0.5 torr; and a treatment time of 2-10 hours, more preferably 4-8 hours;
preferably, the displacement treatment is performed by using an inert gas, and the displacement treatment conditions comprise: a flow rate of the inert gas is within the range of 0.5-5 mL/min·g⁻¹ nickel-aluminum alloy, more preferably within the range of 1-4 mL/min·g⁻¹ nickel-aluminum alloy; the replacement time is 0.5-8 hours, more preferably 1-4 hours; the temperature is within the range of 100-400°C, more preferably within the range of 150-350°C.

15. The method according to any one of claims 8-14, the method further comprises:
loading a metal promoter on the nickel-aluminum alloy by an impregnation method, the metal is at least one selected from the group consisting of group IA, IIA, IIIA, IB and IIB metals, preferably at least one selected from the group consisting of Zn, Ga, Mg and Cu;
preferably, the metal promoter is a metallo-organic compound, more preferably a metallo-zinc-organic compound and/or a metallo-gallium-organic compound, most preferably at least one selected from the group consisting of triethyl gallium, tri-isopropyl gallium, tri-tert-butyl gallium, gallium acetylacetonate, gallium ethoxide, isopropyl gallium, zinc dialkyl dithiophosphate and zinc dialkyl dithiocarbamate;
preferably, the metal promoter is used in such an amount that in the prepared hydrogenation catalyst, the content of the metal promoter calculated in terms of metal oxides is within the range of 1.5%-7%, more preferably within the range of 2%-5.5%, based on the total dry basis weight of the hydrogenation catalyst.

16. The method according to any one of claims 8-15, wherein the method comprises:
impregnating the nickel-aluminum alloy with an impregnation liquid comprising a sulfur-containing organic molybdenum compound and optionally a metal promoter, then drying the nickel-aluminum alloy;
preferably, the solvent in the impregnation liquid is an organic solvent, preferably selected from C1-C10 alkane and/or alcohol, more preferably at least one selected from the group consisting of n-hexane, n-heptane, n-octane, n-nonane, cyclohexane, ethanol, methanol and isopropanol;
preferably, the drying is vacuum drying, more preferably, the drying conditions comprise: a vacuum degree of 0.5-5 torr, preferably 1-3 torr, a drying temperature of 60-150°C, preferably 70-120°C, and a drying time of 2-120 h, preferably 4-8 h.

17. A hydrogenation catalyst prepared with the method according to any one of claims 8-16.

18. Use of the hydrogenation catalyst according to any one of claims 1-7 and 17 in oil product hydroprocessing; preferably the use in oil product hydro finishing.

19. An oil product hydrotreating method, the method comprises: contacting and reacting the oil product with the hydrogenation catalyst according to any one of claims 1-7 and 17 under the hydrotreating conditions;
preferably, the oil product is at least one selected from the group consisting of diesel oil, wax oil and residual oil;
preferably, the oil product has a nitrogen content by mass within the range of 300-3,000 µg/g, a sulfur content by mass within the range of 2,000-30,000 µg/g, and an aromatic hydrocarbon content within the range of 15wt%-80wt%, more preferably 30wt%-70wt%;
preferably, the hydrotreating conditions comprise: a reaction hydrogen pressure of 2-20MPa, more preferably 6-16MPa; a hydrogen/oil volume ratio of (200-1,500) : 1, more preferably (500-1,200) : 1; a gas hourly volume space velocity within the range of 0.2-3h⁻¹, more preferably within the range of 0.5-2h⁻¹, and a reaction temperature within the range of 240-420°C, more preferably within the range of 280-400°C.

20. The method according to claim 19, wherein the method comprises the following steps:
(1) carrying out a first hydrogenation reaction on the oil product and a first hydrogenation catalyst;
(2) performing a second hydrogenation reaction on a product obtained from the first hydrogenation reaction and a second hydrogenation catalyst;
wherein at least one of the first hydrogen generation catalyst and the second hydrogen generation catalyst is selected from the hydrogenation catalysts according to any one of claims 1-6 and 16;
preferably, the first hydrogen generation catalyst and the second hydrogen generation catalyst are each independently the hydrogenation catalyst according to any one of claims 1-6 and 16;
preferably, the metal promoter in the first hydrogenation catalyst is a metallo-zinc-organic compound; the metal promoter of the second hydrogenation catalyst is a metallo-gallium-organic compound;
preferably, the reaction temperature of the first hydrogenation reaction is within the range of 280-390°C, and the reaction temperature of the second hydrogenation reaction is within the range of 290-400°C.
